# EUROPÄISCHE PATENTSCHRIFT

(11) **EP 2 435 738 B1**
(45) Veröffentlichungstag und Bekanntmachung des Hinweises auf die Patenterteilung: **01.05.2013**
(21) Anmeldenummer: 10725014.4
(22) Anmeldetag: 27.05.2010
(51) Int. Cl.: F16K 27/12, F16K 7/12, F16B 39/32, B65D 50/00

(54) **MEMBRANVENTIL-ANTRIEB**
DIAPHRAGM VALVE DRIVE
COMMANDE DE SOUPAPE À MEMBRANE

(30) Priorität: 28.05.2009 DE 102009023002
(43) Veröffentlichungstag der Anmeldung: 04.04.2012
(73) Patentinhaber: Alfa Laval Corporate AB, 221 00 Lund (SE)
(72) Erfinder: SPEER, Guido, Erich, 59379 Selm (DE)
(74) Vertreter: Öberg, Markus Olof
(86) Internationale Anmeldenummer: PCT/EP2010/003217
(87) Internationale Veröffentlichungsnummer: WO 2010/136198

(56) Entgegenhaltungen:
- CH-A5- 594 535
- US-A1- 2005 109 726
- US-B1- 6 173 851

## Beschreibung

Die Erfindung betrifft eine Vorrichtung zur Sicherung und Positionierung eines Antriebs- oder Handhabungselementes an einem Membranventil, wobei ein den Ventilsitz bildendes Unterteil mit Außengewinde und ein die Membranverstellung beherbergendes Topfelement mit Innengewinde vorgesehen ist.

Derartige Membranventile, insbesondere Standardmembranventile, Bodenablassventile, Blockventile, T-Ventile, Tandemventile, Multiportventile und/oder Schweißkonstruktionsventile werden bei einer Vielzahl industrieller und gewerblicher Vorgänge eingesetzt und sind beispielsweise aus der DE 73 33 464 U und der US 5,326,078 A bekannt. Herkömmlich ist ihre Montage zeit-und kostenaufwändig. Die erforderlichen Handoberteile oder -antriebe (insbesondere pneumatische, elektrische oder hydraulische Antriebe), werden regelmäßig mit einem Satz von vier Schrauben mit dem Membranventilkörper verbunden und müssen aufgrund beigefügter Konstruktions- und Montagezeichnungen, Markierungen und Drehmomentvorgaben exakt montiert werden. Dabei muss exakt darauf geachtet werden, dass die Schraubenlöcher am Ventilantrieb oder Handoberteil mit den Schraubenlöchern am Ventilkörper übereinstimmen. Zusätzlich müssen Federringe auf die Schrauben aufgesteckt werden. Sodann muss die mit dem Federring am Schraubenkopfende ausgerüstete Schraube von der Ventilkörperseite her durch die Schraubenlöcher des Ventilkörpers gesetzt und zunächst von Hand in den Ventilkörper eingedreht werden. Der Montagevorgang wiederholt sich mit drei weiteren Schrauben, die anschließend gleichmäßig und über Kreuz an dem Ventilkörper festgezogen werden müssen. Dabei sind die Anzugsmomente der Schraubbefestigung des Ventilkörpers am Ventilantrieb in den jeweiligen technischen Dokumentationen genau einzuhalten. Da sich die Membranen im Laufe der Zeit setzen können, müssen die Anzugsmomente der Schrauben regelmäßig vor Inbetriebnahme der Ventile und während der gesamten Betriebsdauer regelmäßig überprüft werden. Gleichzeitig muss darauf geachtet werden, beim Anziehen der Schrauben keine Gewalt anzuwenden. Zu große Anzugsmomente beschädigen die Membrane und den Ventilantrieb. Beschädigte Ventilantriebe oder Membranen sind funktionsuntauglich und können zu Fehlern führen.

Daneben gibt es auch Membranventile mit einem sogenannten Zentralgewinde. Dabei handelt es sich um Membranventile aus einem den Ventilsitz bildenden Unterteil mit einem Außengewinde und einem die Membranverstellung beherbergenden Topfelement mit Innengewinde. Auch derartige Verbindungen mit einem Zentralgewinde werden mittels Drehmomentschlüsseln montiert. Während des Betriebes ist ein regelmäßiges Nachziehen und Nachjustieren notwendig. Weder bei der Inbetriebnahme noch bei der Montage ist eine absolute Dichtheit gewährleistet.

Die handelsüblichen Membranventile können außerdem verschiedene Membranqualitäten aufweisen. Diese werden mittels sogenannter Lappen an der Membran gekennzeichnet. Dieser Membrantypenindex steht seitlich aus dem Ventilkörper heraus, so dass die Qualität von außen ohne Öffnen des Ventils abgelesen werden kann. Gleichzeitig stellt der Lappen jedoch eine Gefahr für mechanische Verletzungen der Ventilmembran dar, er kann zudem verschmutzen, abreißen oder dergl.

Vorrichtungen zur Sicherung eines Gewirde sind z.B. in US2005/0109726, CH 594535 oder US6173851 offenbart.

Aufgabe der Erfindung ist es daher, eine Lösung zu schaffen, mit der bei der Montage von Handoberteilen und Antrieben an Membranventilen auf Drehmomentschlüssel, sonstiges Werkzeug, Markierungen, Zeichnungen und andere Hilfsmittel verzichtet werden kann. Ebenso soll anstelle der Lappen eine robustere Lösung geschaffen werden.

Diese Aufgabe wird gemäß der Erfindung dadurch gelöst, dass im Endbereich des Außengewindes oder im Auflaufring für das Topfelement am Unterteil ein mechanisches Sperr-/Anschlagelement und in der jeweils korrespondierenden Gewindefläche bzw. Stirnfläche des Topfelementes eine Raste mit Einlauf-/Auslauf-rampe für das Sperr-/Anschlagelement vorgesehen ist.

Erkennbar wird durch die Erfindung erreicht, dass bei einer definierten Endstellung eine Verrastung der gegeneinander schraubbaren Elemente erfolgt, die den gewünschten Montagezustand, sei es akustisch, sei es optisch, kenntlich macht.

Ausgestaltungen der Erfindung ergeben sich aus den Unteransprüchen. Dabei kann vorgesehen sein, dass das mechanische Sperr-/Anschlagelement von einer federbeaufschlagten Raste gebildet ist, wobei eine besondere Ausgestaltung der Erfindung darin besteht, dass die federbeaufschlagte Raste von einer durch eine Feder beaufschlagten Kugel gebildet ist.

Die weiteren kennzeichnenden Positionen der einzelnen Elemente der Vorrichtung nach der Erfindung bestehen unter anderem auch darin, dass zur optischen Kenntlichmachung der Rastposition eine körperliche und/oder farbliche Kennzeichnung am Unterteil vorgesehen ist, die an einem Fenster des Topfelementes ablesbar ist, und/oder dass zur Kenntlichmachung der Membranart eine farbliche Kennzeichnung der Kugel vorgesehen ist.

Die Erfindung umfasst auch ein entsprechendes Verfahren zur Positionierung und Sicherung eines Antriebs- oder Handhabungselementes an einem Membranventil.

Die Erfindung ist nachstehend anhand der Zeichnung beispielhaft näher erläutert. Diese zeigt in:

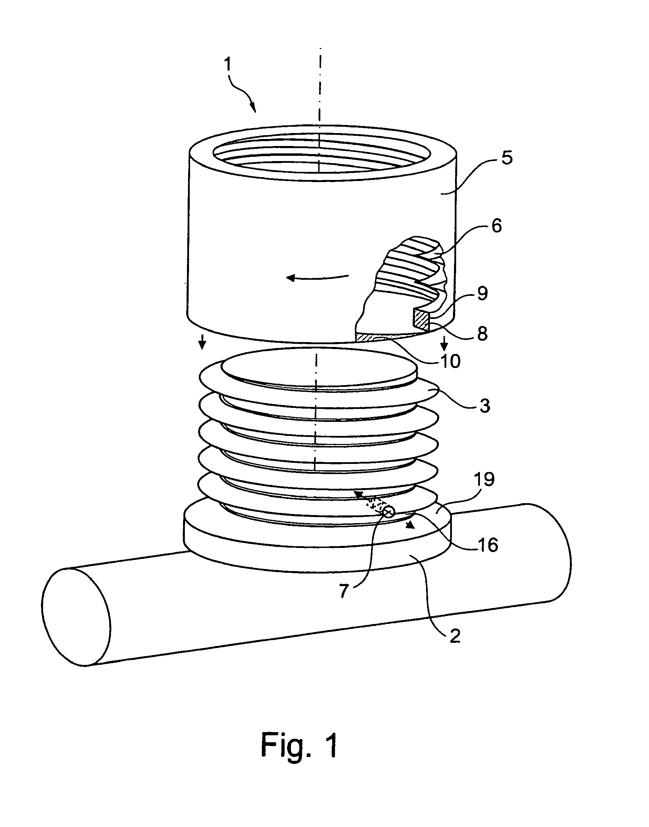

- Fig. 1: eine perspektivische Ansicht eines erfindungsgemäßen Membranventils mit einem Sperr-/Anschlagelement im Endbereich des Außengewindes,

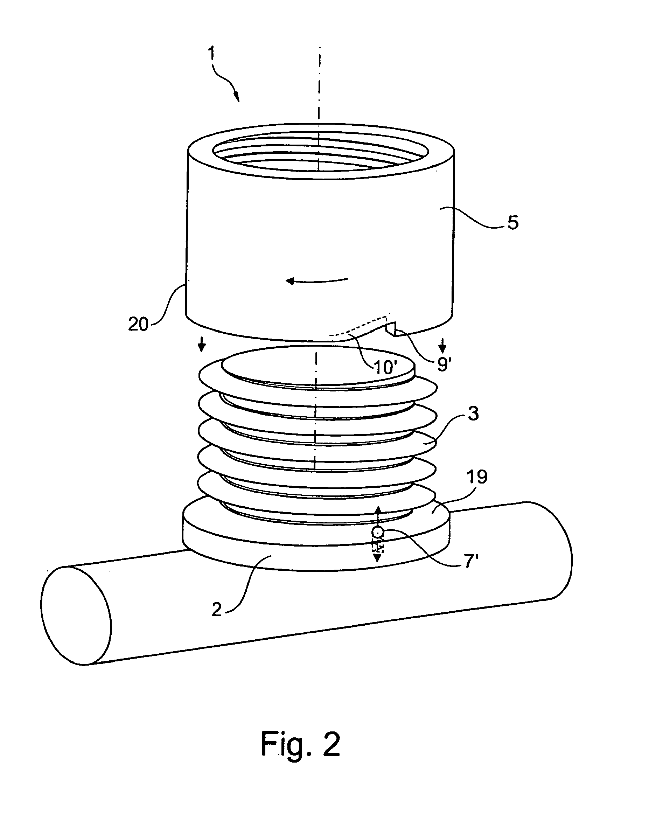

- Fig. 2: eine perspektivische Ansicht eines Membranventils mit einem Sperr-/Anschlagelement im Auflaufring für das Topfelement,

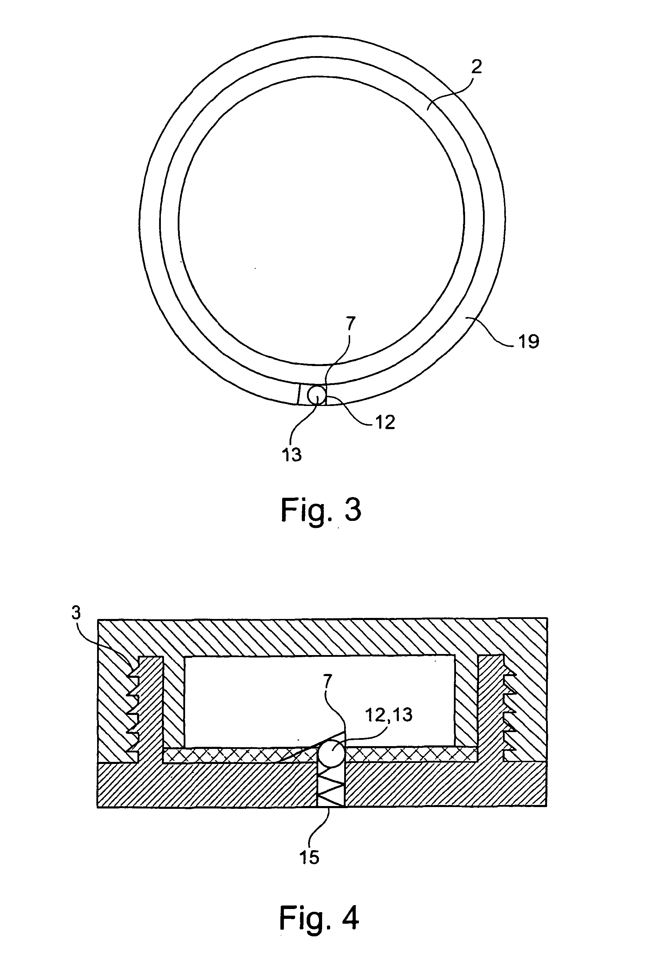

- Fig. 3: eine Draufsicht auf den Auslaufbereich für das Topfelement am Unterteil,
- Fig. 4: einen Schnitt durch das Unterteil mit Außengewinde und das aufgedrehte Topfelement mit Innengewinde mit einer federbeaufschlagten Raste und Kugel,

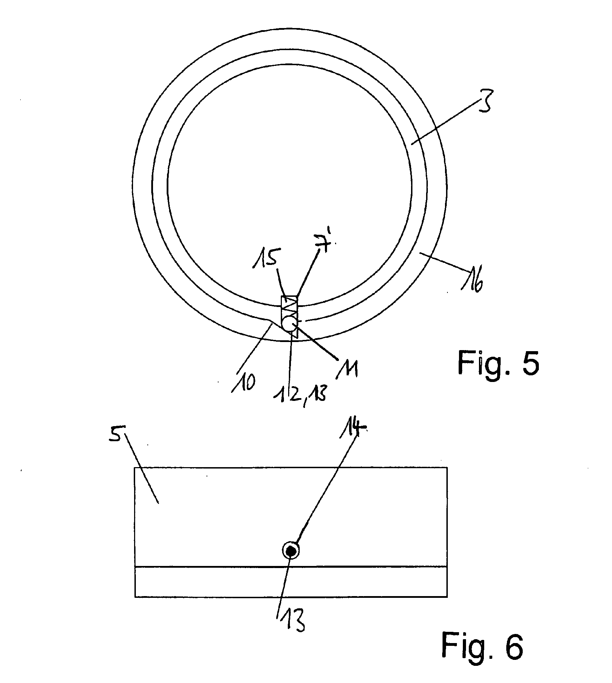

- Fig. 5: eine Draufsicht auf den Endbereich des Außengewindes am Unterteil mit einer federbeaufschlagten Raste und Kugel,
- Fig. 6: eine Seitenansicht des Topfelementes mit einem Anzeigefenster.

Ein allgemein mit 1 bezeichnetes Membranventil weist ein den Ventilsitz bildendes Unterteil 2 mit einem Außengewinde 3 (Zentralgewinde) und einem Auflaufring 19 und ein die nicht näher dargestellte Membranverstellung beherbergendes Topfelement 5 mit Innengewinde 6 auf.

Im Endbereich 16 des Außengewindes 3 oder im Auflaufring 19 für das Topfelement 5 am Unterteil 2 ist ein mechanisches Sperr-/Anschlagelement 7, 7' und in der jeweils korrespondierenden Gewindefläche 8 bzw. Stirnfläche 20 des Topfelementes 5 eine Raste 9, 9' mit Einlauf-/Auslauframpe 10, 10' für das Sperr-/Anschlagelement 7, 7' vorgesehen. Dabei ist das mechanische Sperr-/Anschlagelement 7, 7' von einem federbeaufschlagten Rastelement 11 gebildet. Im Einzelnen ist das federbeaufschlagte Rastelement 11 von einer durch eine Feder 15 beaufschlagten Kugel 12 gebildet. Zur optischen Kenntlichmachung der Rastposition ist zudem eine körperliche und/oder farbliche Kennzeichnung 13 am Unterteil 2 vorgesehen, die durch ein Fenster 14 am Topfelement 5 von aussen ables- und erkennbar ist. Insbesondere kann zur Kenntlichmachung der Membranart eine farbliche Kennzeichnung der Kugel 12 vorgesehen sein.

Die Wirkungsweise der Vorrichtung ist dabei die folgende:

Das nicht näher dargestellte Handoberteil oder der Ventilantrieb oder sonstige Handhabungselement wird in einer vordefinierten Stellung auf das Außengewinde 3 des Unterteils 2 (Zentralgewinde) des Membranventils aufgesetzt und mittels eines an dem Hand-Oberteil oder Antrieb befindlichen Topfelementes 5 mit Innengewinde 6 von Hand aufgeschraubt, bis dieses seine Endstellung erreicht. Aufgrund einer entsprechenden, festgelegten Gewindesteigung, des positionierten Außengewindes 3 und des definierten Endanschlages, bei dem die Vorspannung immer gleich ist, wird die Dichtheit des Membranventiles 1 garantiert. Bei Erreichen der Endstellung ist ein weiteres Festdrehen des Topfelementes 5 mit Innengewinde 6 nicht mehr möglich. Vielmehr ist im Endbereich 16 des Außengewindes 3 oder im Auflaufring 19 für das Topfelement 5 am Unterteil 2 ein mechanisches Sperr-/Anschlagelement 7, 7' und in der jeweils korrespondierenden Gewindefläche 8 bzw. Stirnfläche 20 des Topfelementes 5 eine Raste 9, 9' mit Einlauf-/Auslauframpe 10, 10' für das Sperr-/Anschlagelement 7, 7' vorgesehen. Damit ist ein Weiter- oder Überdrehen nicht möglich; zugleich wird ein fester und dichter Sitz sichergestellt. Wird das mechanische Sperr-/Anschlagelement 7, 7' von einem federbeaufschlagten Rastelement 11 gebildet, ist diese insbesondere von einer durch eine Feder 15 beaufschlagten Kugel 12 gebildet, ergibt sich eine automatische Arretierung. Dabei wird für die Einlauf-/Auslauframpe 10, 10' zweckmäßig ein solcher Rücklaufwinkel gewählt, dass das Losbrechmoment kleiner als das Losdrehmoment ist. Ein unbeabsichtigtes Lösen des Handhabungselementes 17, insbesondere des Handoberteils oder des Antriebes, ist dann auch bei laufendem Betrieb, bei den üblichen Erschütterungen und dergl. nicht mehr möglich. Vielmehr muss das Handoberteil oder der Antrieb, also das Topfelement 5, falls gewünscht, bewusst wieder mit entsprechend größerem Kraftaufwand losgedreht werden, beispielsweise wenn die ventilmembran ausgetauscht oder gewechselt werden soll. Während der gesamten Betriebszeit ist ein Nachziehen und Justieren nicht mehr notwendig. Um die Montage zu erleichtern, ist zur optischen Kenntlichmachung der Rastposition eine körperliche und/oder farbliche Kennzeichnung am Unterteil 2 vorgesehen. Diese kann durch eine entsprechende, z.B. fensterförmige Ausnehmung 14 oder dergl. am Topfelement 5 von außen abgelesen werden. Insbesondere kann zur Kenntlichmachung der eingesetzten Membranart eine farbliche Kennzeichnung der Kugel 12 vorgesehen sein. In diesem Fall bilden die Sicherungsvorrichtung 12 und die Anzeigevorrichtung 13 eine Einheit.

Die Membran ist über ihre gesamte Lebenszeit nach außen und innen dicht. Die exakte mechanische Verriegelung wird, je nach Wunsch, optisch oder durch einen Klick akustisch angezeigt. Die optische Anzeige oder der Klick bestätigen die richtige Positionierung, d.h. die Dichtheit der Membrane und die notwendige Sicherung, so dass kein Verdrehen des Topfelementes 5 mit Innengewinde 6 während des Betriebes möglich ist. Zum Einsatz kommen insbesondere spezielle kurze Federstößel mit entsprechender Lastdimensionierung im federnden Bereich bzw. bei vollständig zusammengedrückter Feder.

Natürlich ist die Erfindung nicht auf die dargestellten Ausführungsbeispiele beschränkt. Weitere Ausgestaltungen sind möglich, ohne den Grundgedanken zu verlassen. Wesentlich ist nur, dass die Sicherung und Positionierung des Antriebs oder Handoberteils werkzeugfrei durch eine mechanische Verriegelung erfolgt und optional optisch und/oder akustisch angezeigt wird.

## Patentansprüche

1. Vorrichtung konfiguriert zur Sicherung und Positionierung eines Antriebs- und/oder Handhabungselementes an einem Membranventil (1), mit einem den Ventilsitz bildenden Unterteil (2) mit Außengewinde (3) und einem die Membranverstellung beherbergenden Topfelement (5) mit Innengewinde (6), **dadurch gekennzeichnet, dass** im Endbereich (16) des Außengewindes (3) oder im Auflaufring (19) für das Topfelement (5) am Unterteil (2) ein mechanisches Sperr-/Anschlagelement (7,7') und in der jeweils korrespondierenden Gewindefläche (8) bzw. Stirnfläche (20) des Topfelementes (5) eine Raste (9,9') mit Einlauf-/Auslauframpe (10,10') für das Sperr-/Anschlagelement (7) angeordnet sind.

2. Vorrichtung nach Anspruch 1, **dadurch**
**gekennzeichnet , dass** das mechanische Sperr-/Anschlagelement (7,7') von einem federbeaufschlagten Rastelement (11) gebildet ist.

3. Vorrichtung nach Anspruch 2, **dadurch**
**gekennzeichnet, dass** das federbeaufschlagte Rastelement (11) von einer durch eine Feder (15) beaufschlagten Kugel (12) gebildet ist.

4. Vorrichtung nach Anspruch 3, **dadurch**
**gekennzeichnet, dass** zur optischen Kenntlichmachung der Rastposition eine körperliche und/oder farbliche Kennzeichnung am Unterteil (2) vorgesehen ist, die an einem Fenster (14) des Topfelementes (5) ablesbar ist.

5. Vorrichtung nach Anspruch 3, **dadurch**
**gekennzeichnet, dass** zur Kenntlichmachung der Membranart eine farbliche Kennzeichnung (13) der Kugel (12) vorgesehen ist.

6. Verfahren zur Sicherung und Positionierung eines Antriebs- oder Handhabungselementes an einem Membranventil (1) mit einem den Ventilsitz bildenden Unterteil (2) mit Außengewinde (3) und einem die Membranverstellung beherbergenden Topfelement (5) mit Innengewinde (6), **dadurch gekennzeichnet, dass** das Topfelement (5) auf das Unterteil (2) von Hand aufgeschraubt wird, bis ein mechanisches Sperr-/Anschlagelement (7,7') im Endbereich (16) des Außengewindes (3) oder im Auflaufring (19) für das Topfelement (5) am Unterteil (2) in eine Raste (11) mit Einlauf-/Auslauframpe (10,10') für das Sperr-/Anschlagelement (7,7') in der jeweils korrespondierenden Gewindefläche (8) bzw. Stirnfläche (20) des Topfelementes (5) einrastet, so dass das Antriebs- oder Handhabungselement automatisch richtig positioniert und gesichert wird.

7. Verfahren nach Anspruch 6, **dadurch gekennzeichnet, dass** die Positionierung und Sicherung des Antriebs- oder Handhabungselementes optisch und/oder akustisch durch einen Klick angezeigt wird.

## Claims

1. Device configured for securing and positioning a drive and/or handling element on a diaphragm valve (1) with a bottom part (2) with an external thread (3) forming the valve seat and a pot element (5) with internal thread (6) accommodating the diaphragm adjustment, **characterised by** that a mechanical blocking/stop element (7, 7') is arranged in the end area (16) of the external thread (3) or in the ramp ring (19) for the pot element (5) on the bottom part (2) and in the respectively corresponding thread face (8) or end face (20) of the pot element (5) a notch (9, 9') with inlet/outlet ramp is arranged for the blocking/stop element (7).

2. Device according to claim 1, **characterised by** that the mechanical blocking/stop element (7, 7') is formed by a spring-loaded latching element (11).

3. Device according to claim 2, **characterised by** that the spring-loaded latching element (11) is formed by a ball (12) acted upon by a spring (15).

4. Device according to claim 3, **characterised by** that for optical identification of the latching position, a physical and/or coloured marking is provided on the bottom part (2), which can be read at a window (14) of the pot element (5).

5. Device according to claim 3, **characterised by** that to identify the diaphragm type a coloured marking (13) of the ball (12) is provided.

6. Method for securing and positioning a drive and/or handling element on a diaphragm valve (1) with a bottom part (2) with an external thread (3) forming the valve seat and a pot element (5) with internal thread (6) accommodating the diaphragm adjustment, **characterised by** that the pot element (5) is screwed onto the bottom part (2) manually until a mechanical blocking/stop element (7, 7') in the end area of the external thread (3) or in the ramp ring (19) for the pot element (5) on the bottom part (2) latches in a latching element (11) with inlet/outlet ramp (10, 10') for the blocking/stop element (7, 7') in the respectively corresponding thread face (8) or end face (20) of the pot element (5), so that the drive or handling element is automatically correctly positioned and secured.

7. Method according to claim 6, **characterised by** that the positioning and securing of the drive or handling element is shown optically and/or acoustically by a click.

## Revendications

1. Dispositif configuré pour le blocage et le positionnement d'un élément de commande et/ou de maniement sur une soupape à membrane (1), avec une partie inférieure (2) formant le siège de soupape présentant un filet extérieur (3) et un élément de pot (5) abritant le déplacement de la membrane présentant un filet intérieur (6), **caractérisé en ce qu'**un élément de verrouillage/butée (7, 7') mécanique est disposé dans la zone d'extrémité (16) du filet extérieur (3) ou dans l'anneau d'accostage (19) pour l'élément de pot (5) sur la partie inférieure (2) et un cran d'arrêt (9, 9') présentant une rampe d'entrée/de sortie (10, 10') pour l'élément de verrouillage/butée (7) est disposé dans la surface de filet (8) ou la face frontale (20) de l'élément de pot (5) respectivement correspondante.

2. Dispositif selon la revendication 1, **caractérisé en ce que** l'élément de verrouillage/butée (7, 7') mécanique est formé par un élément d'arrêt (11) à ressort.

3. Dispositif selon la revendication 2, **caractérisé en ce que** l'élément d'arrêt (11) à ressort est formé par une sphère (12) soumise à l'impact d'un ressort (15).

4. Dispositif selon la revendication 3, **caractérisé en ce qu'**un marquage physique et/ou coloré est prévu sur la partie inférieure (2) pour le marquage optique de la position d'enclenchement, qui est lisible au niveau d'une fenêtre (14) de l'élément de pot (5).

5. Dispositif selon la revendication 3, **caractérisé en ce qu'**un marquage (13) coloré de la sphère (12) est prévu pour le marquage du type de membrane.

6. Procédé de blocage et de positionnement d'un élément de commande ou de maniement sur une soupape à membrane (1) avec une partie inférieure (2) formant le siège de soupape présentant un filet extérieur (3) et un élément de pot (5) abritant le déplacement de la membrane présentant un filet intérieur (6), **caractérisé en ce que** l'élément de pot (5) est vissé à la main sur la partie inférieure (2) jusqu'à ce qu'un élément de verrouillage/butée (7, 7') mécanique dans la zone d'extrémité (16) du filet extérieur (3) ou dans l'anneau d'accostage (19) pour l'élément de pot (5) sur la partie inférieure (2) s'enclenche dans un cran d'arrêt (11) présentant une rampe d'entrée/de sortie (10, 10') pour l'élément de verrouillage/butée (7, 7') dans la surface de filet (8) ou la face frontale (20) de l'élément de pot (5) respectivement correspondante, de sorte que l'élément de commande ou de maniement est automatiquement positionné et bloqué correctement.

7. Procédé selon la revendication 6, **caractérisé en ce que** le positionnement et le blocage de l'élément de commande ou de maniement est indiqué de manière optique et/ou acoustique par un clic.
